# EUROPEAN PATENT SPECIFICATION

(11) **EP 4 491 856 B1**
(45) Date of publication and mention of the grant of the patent: **12.08.2026**
(21) Application number: 24183025.6
(22) Date of filing: 19.06.2024
(51) Int. Cl.: F01P 7/16, F01P 11/04, B60K 11/02, H01M 10/60, F16K 5/02, F16K 11/083, F01P 7/14

(54) **MANIFOLD**
VERTEILER
COLLECTEUR

(30) Priority: 12.07.2023 JP 2023114656; 27.03.2024 JP 2024051604
(43) Date of publication of application: 15.01.2025
(73) Proprietor: Aisin Corporation, Kariya, Aichi 448-8650 (JP)
(72) Inventor: ISHII, Masato, Kariya, 448-8650 (JP); HISAMATSU, Tetsuya, Kariya, 448-8650 (JP); ASAI, Kenta, Kariya, 448-8650 (JP); MAEDA, Michitaka, Kariya, 448-8650 (JP); TAJIMA, Kiyoshi, Kariya, 448-8650 (JP); KOMURO, Kenichi, Kariya, 448-8650 (JP); YAMADA, Koji, Kariya, 448-8650 (JP); KURIMOTO, Akira, Kariya, 448-8650 (JP); YANO, Hideto, Kariya, 448-8650 (JP)
(74) Representative: TBK

(56) References cited:
- EP-B1- 3 746 322
- WO-A1-2022/143866
- WO-A1-2022/266945
- US-A- 4 723 596
- US-A1- 2002 121 554

## Description

### TECHNICAL FIELD

This disclosure relates to a manifold.

### BACKGROUND DISCUSSION

JP 2022-120893 A (Reference 1) discloses that, in a fuel cell vehicle, a cooling system includes a first cooling circuit including an FC radiator that cools a fuel cell, a second cooling circuit including an EV radiator that cools an EV unit, a bypass outward path that allows a refrigerant to flow out from the first cooling circuit to the second cooling circuit, and a bypass return path that allows the refrigerant to flow from the second cooling circuit to the first cooling circuit.

Reference 1 discloses the first cooling circuit capable of cooling the fuel cell (FC) by circulating the refrigerant between the fuel cell and the FC radiator using an FC pump. In addition, Reference 1 discloses that cooling of an EVU unit (EVU) is enabled by circulating the refrigerant using an EV pump between the EV radiator and the EVU unit including a motor, an inverter, a battery, and the like.

JP 2013-23125 A (Reference 2) discloses a reservoir tank in which a reservoir tank body is formed by joining a lower flange at a lower end of a vertical wall portion of a reservoir lower and an upper flange at an upper end of a vertical wall portion of a reservoir upper.

In Reference 2, the reservoir tank body is made of resin, and an upper end of a melting rib protruding upward from an upper surface of the lower flange is brought into contact with a lower surface of the upper flange, and the lower flange and the upper flange are joined by vibration welding.

US 2002/121554 A1 discloses a water-type cooling unit for a vehicle equipped with an internal-combustion engine, the unit being connected via a main circulation loop formed by appropriate conduits, in particular to at least one radiator for cooling the water or the similar coolant and to the circuits for cooling the cylinder block and the cylinder heads.

WO 2022/266945 A1 discloses a multi-channel cooling line integration apparatus, a thermal management integration module, and an electric vehicle, belonging to the technical field of vehicles. The multi-channel cooling line integration apparatus is basically a rectangular plate shape, having formed therein multiple cooling connection lines, and having multiple component mounting points and multiple component connection ports arranged on the surface thereof. The multiple component mounting points are configured to be used to mount at least two thermal management components thereon. Each component connection port is in communication with a corresponding cooling connection line, so that the at least two thermal management components mounted to the multiple component mounting points are connected to corresponding cooling connection lines by means of the component connection ports, and the at least two thermal management components are connected to each other by means of the multiple cooling connection lines.

EP 3 746 322 B1 discloses a device for managing at least one fluid within a vehicle, in particular an at least partially electrically driven vehicle, comprising at least one substantially planar first distribution element and at least one second distribution element arranged substantially parallel to the first distribution element, wherein the first distribution element and/or the second distribution element comprises or comprise at least in some regions at least one fluid management element, and wherein the first distribution element and the second distribution element comprise plastic at least in some regions.

US 4 723 596 A discloses a volume expansion, venting and reservoir tank for the liquidcooling system of internal combustion engines with two chambers connected by means of an overflow line, which are formed from plastic molded parts welded together. The overflow line as well as further connections and openings are molded integrally with the molded parts at a filler inlet.

As disclosed in Reference 1, in the cooling system that circulates the refrigerant in flow paths of a plurality of systems, it is desirable to form the pumps and the flow paths integrally in a housing from the viewpoint of handling and mountability on a vehicle body.

In this way, from the viewpoint of handling, mountability, and the like, it is also conceivable to use a manifold that integrates a plurality of flow paths with pumps, valves, and the like in a state in which these are accommodated in a case.

As a specific configuration, similar to a configuration disclosed in Reference 2, an upper housing and a lower housing are individually manufactured, and a manifold is formed by welding a flange formed on the upper housing and a flange formed on the lower housing.

In this case, in order to uniformly apply a fluid pressure, it is common to set vertical walls on an outer periphery of the upper housing and vertical walls on an outer periphery of the lower housing to have the same dimension in an upper-lower direction, and to weld these vertical walls at a central position of the manifold in the upper-lower direction.

On the other hand, when the fluid pressure inside the manifold increases, vertical walls of the manifold are deformed so as to bulge outward. Judging from such deformation, when the vertical walls of the upper housing and the vertical walls of the lower housing are welded at the central position of the manifold in the upper-lower direction, a stress may be concentrated on a welding site, resulting in breakage.

A need thus exists for a manifold capable of preventing stress concentration on a welding site of upper and lower housings.

### SUMMARY

This object is achieved by a manifold having the features of claim 1. Advantageous further developments are defined in the dependent claims.

According to this configuration, the housing in which the upper housing and the lower housing are integrated is formed by thermally welding the first opening of the upper housing and the second opening of the lower housing. At this time, since a welding site is located above or below the center of the housing in the upper-lower direction, for example, even when a central position of an outer wall of the housing in the upper-lower direction bulges outward most greatly as a pressure of the fluid flowing inside the housing increases, no stress is concentrated on the welding site, and damage at the welding site can be prevented. Therefore, the manifold capable of preventing stress concentration on the welding site of the upper and lower housings is provided.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is an exploded perspective view of a manifold;
FIG. 2 is a cross-sectional view of the manifold in a region from a valve to a pump;
FIG. 3 is a plan view of the manifold;
FIG. 4 is a bottom view of an upper housing showing a form of a first opening;
FIG. 5 is a view showing a cutout portion between a first main annular rib and a first partition wall rib;
FIG. 6 is a view showing a cutout portion between first partition wall ribs;
FIG. 7 is a plan view of a lower housing showing a form of a second opening;
FIG. 8 is a view showing a cutout portion between a second main annular rib and a second partition wall rib;
FIG. 9 is a view showing a cutout portion between second partition wall ribs;
FIG. 10 is a cross-sectional view of the manifold taken along a line X-X shown in FIG. 3;
FIG. 11 is a cross-sectional view of the manifold separated into the upper housing and the lower housing, taken along the line X-X shown in FIG. 3;
FIG. 12 is a cross-sectional view of the manifold showing a position of a joining portion according to another embodiment (a);
FIG. 13 is a cross-sectional view showing an arrangement of an upper rib, a lower rib, and the like according to another embodiment (d);
FIG. 14 is a cross-sectional view of the upper rib and the lower rib in a welded state according to the other embodiment (d); and
FIG. 15 is a perspective view showing a part of a lower housing according to the other embodiment (d).

### DETAILED DESCRIPTION

Hereinafter, embodiments of a manifold according to this disclosure will be described with reference to the drawings. The manifold controls a flow of fluid that exchanges heat for a battery or the like in an electric vehicle as described below, but is not limited to the following embodiments, and various modifications can be made without departing from the spirit of this disclosure.

### Basic Configuration

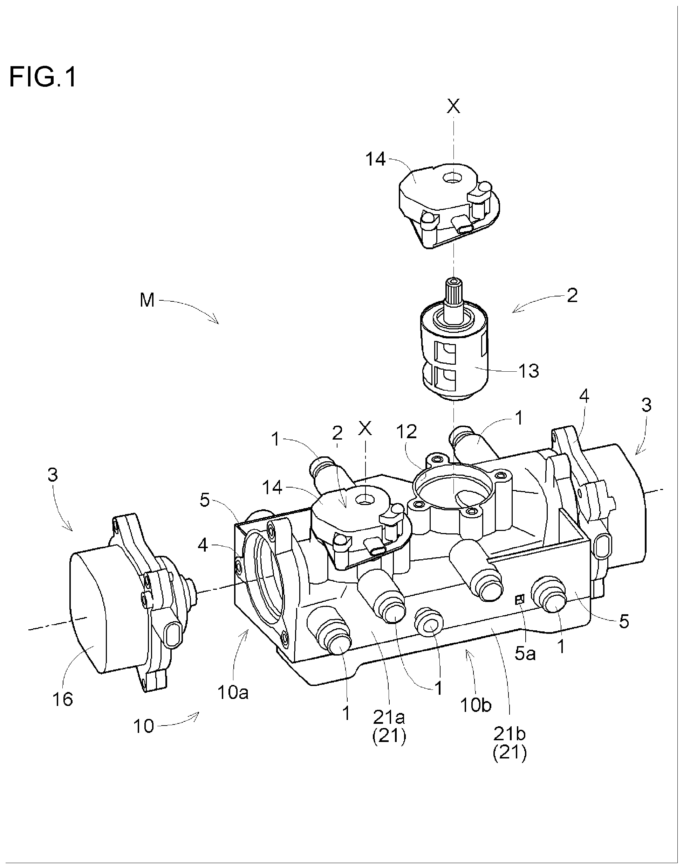

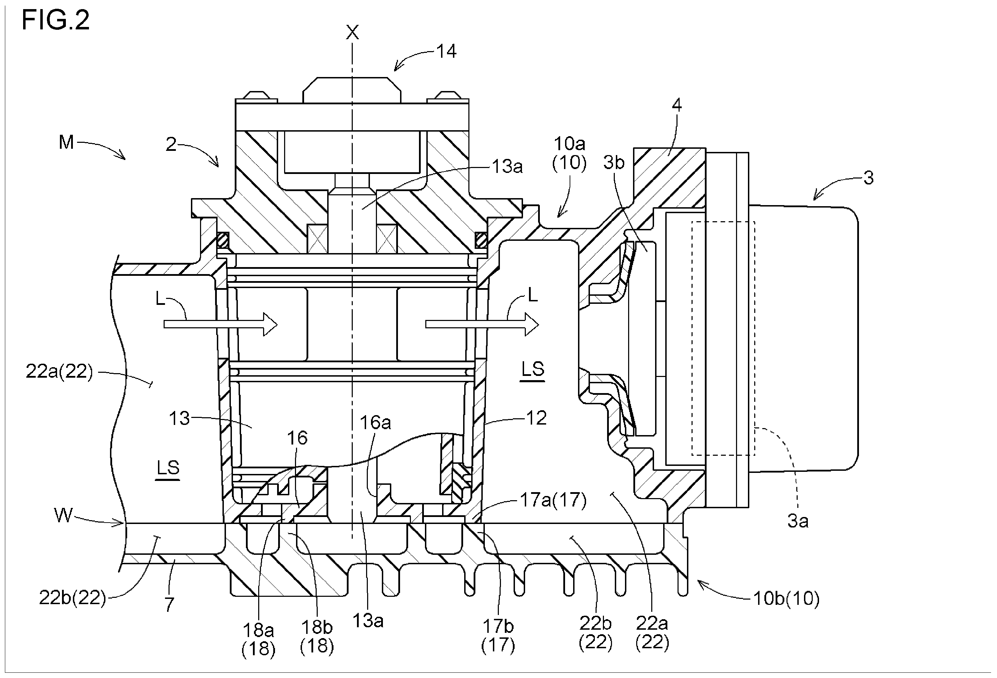

As shown in FIG. 1, a housing 10 includes a plurality of tubular ports 1 (an example of an inflow and outflow pipe), a pair of valves 2, and a pair of pumps 3, and a manifold M is implemented by forming a flow path L (see FIG. 2) in an internal space of the housing 10.

The manifold M is mounted on an electric vehicle that travels by electric power. The manifold M controls fluid flowing between a cooling target (not shown) such as a battery, an inverter, a traveling motor, and the like mounted on the electric vehicle and a heat dissipation unit (not shown) such as a radiator and a chiller.

The traveling motor is a traveling drive source that is operated by being supplied with electric power, and the inverter controls the electric power supplied to the traveling motor. The battery is implemented as a rechargeable and dischargeable secondary battery, and supplies electric power to the inverter, the traveling motor, or the like as necessary.

Examples of the electric vehicle include a hybrid electric vehicle (HEV), a plug-in hybrid electric vehicle (PHEV), a battery electric vehicle (BEV), and a fuel cell electric vehicle (FCEV).

The manifold M constitutes a part of a temperature management unit (not shown). The temperature management unit includes a control unit (not shown) that acquires signals from sensors such as a battery temperature sensor (not shown) which measures a temperature of the battery, and a fluid temperature sensor (not shown) which measures a temperature of the fluid in the flow path L, and that independently controls the pair of valves 2 and the pair of pumps 3.

In the manifold M, a cooling fluid such as a long life coolant (LLC) is used as the fluid. The fluid is not limited to the cooling fluid such as the long life coolant (LLC), and may also be an insulating oil of paraffin-based or the like, or a refrigerant such as hydrofluorocarbon (HFC) or hydrofluoroolefin (HFO).

### Manifold

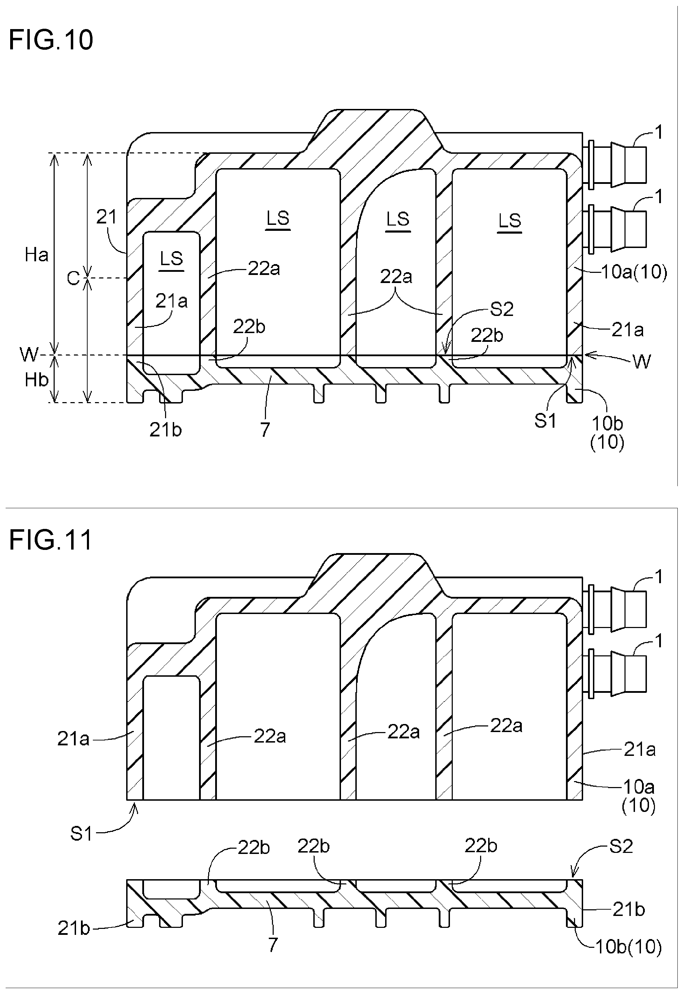

The housing 10 constituting the manifold M is provided in the electric vehicle in a posture shown in FIG. 1. As shown in FIGS. 1, 2, and 10, the manifold M is implemented by the housing 10 in which an upper housing 10a made of a thermoplastic resin and a lower housing 10b made of a thermoplastic resin that is the same material as the upper housing 10a are integrated by thermal welding using an infrared ray.

The upper housing 10a and the lower housing 10b are molded products using a glass fiber reinforced thermoplastic resin. Fibers used for reinforcement are not limited to glass fibers, and may be high-strength fibers such as carbon fibers. The thermal welding will be described later.

As shown in FIG. 2, the housing 10 has flow path chambers LS, each of which allows the fluid to flow between a plurality of partition walls 22 or between an outer wall 21 and the partition wall 22. The flow path chamber LS communicates with the inside of the preset tubular port 1 or a tubular portion 12 of the valve 2. The valve 2 controls a flow of the fluid among a plurality of flow path chambers LS.

As shown in FIGS. 2, 4, 7, and 10, the outer wall 21 includes a first outer wall rib 21a formed in the upper housing 10a and a second outer wall rib 21b formed in the lower housing 10b. The partition wall 22 includes first partition wall ribs 22a formed in the upper housing 10a and second partition wall ribs 22b formed in the lower housing 10b.

The first outer wall rib 21a and the second outer wall rib 21b are integrated by thermal welding to form the outer wall 21. The first partition wall ribs 22a and the second partition wall ribs 22b are integrated by thermal welding to form the partition wall 22. The welding will be described later.

### Upper Housing

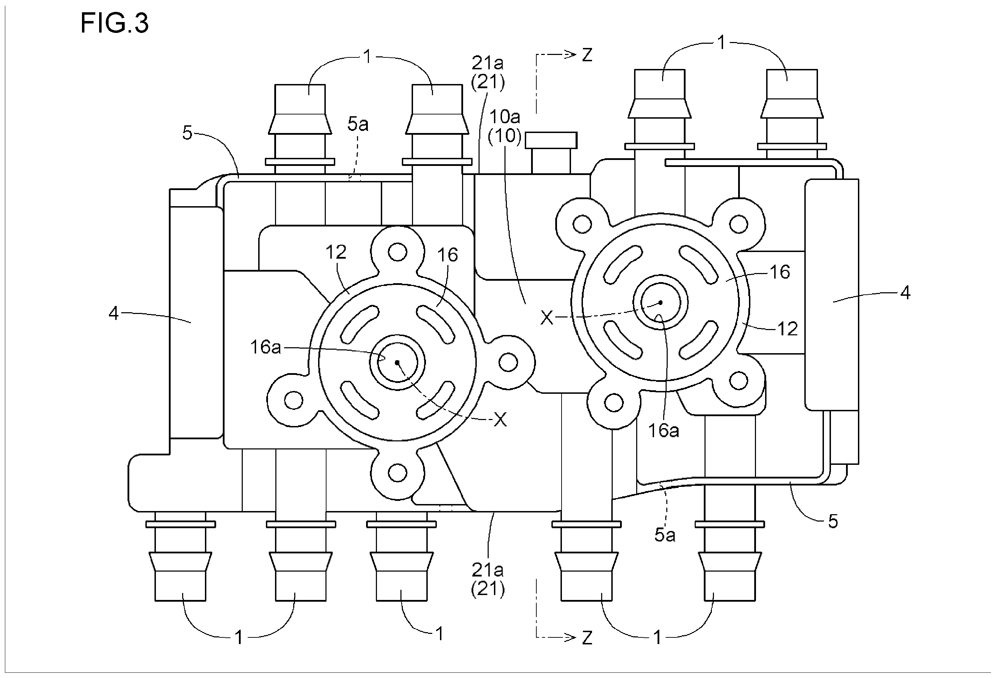

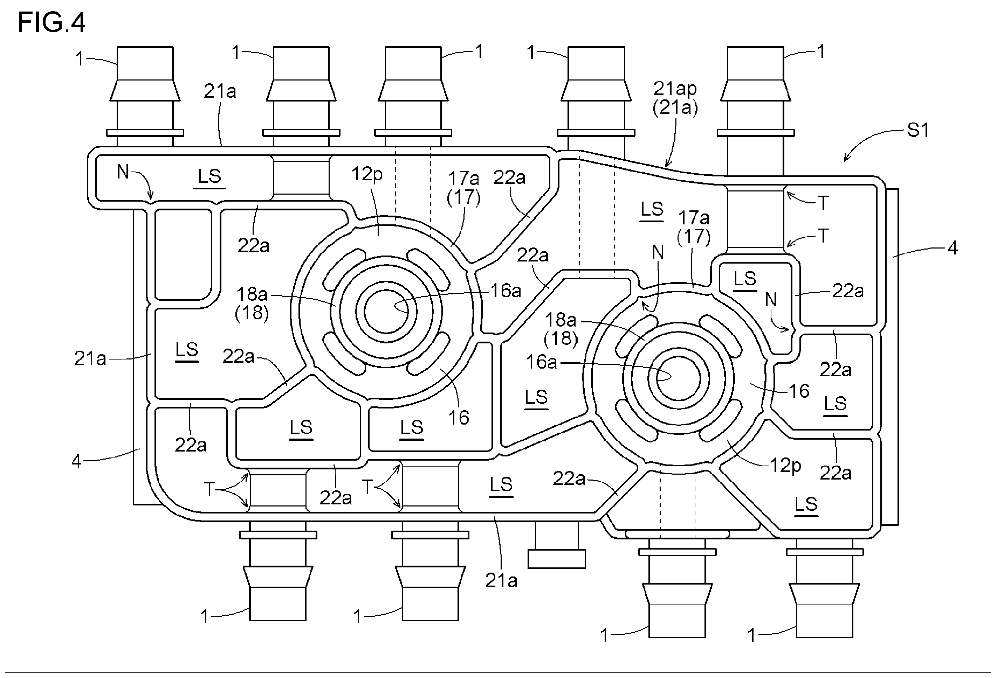

As shown in FIGS. 3 and 4, the upper housing 10a has a substantially rectangular shape in a plan view, and the plurality of tubular ports 1 (inflow and outflow pipes) protrude outward in a horizontal position from the upper housing 10a. As shown in FIGS. 4, 10, and 11, the upper housing 10a has a first opening S1 opened downward.

As shown in FIGS. 1 and 2, the upper housing 10a has two valves 2 disposed at a central portion. The valve 2 includes a valve body 13 rotatably accommodated inside the tubular portion 12 centered on a vertical axis X. The valve body 13 includes an operation shaft 13a protruding in the upper-lower direction. The valve 2 includes an electric valve drive unit 14 that drives and rotates the operation shaft 13a of the valve body 13, and the valve drive unit 14 is provided at an upper portion of the upper housing 10a.

A bearing hole 16a is formed in a bottom plate 16 formed at a lower portion of the tubular portion 12. As described above, an upper end of the operation shaft 13a is connected to the valve drive unit 14, and a lower end of the operation shaft 13a is supported by the bearing hole 16a, whereby the valve body 13 rotates about the vertical axis X to control the flow of the fluid.

As shown in FIGS. 2 and 4, in the upper housing 10a, a main annular rib 17 (an example of a first annular rib) is formed at a lower end of the tubular portion 12, and a sub-annular rib 18 (an example of a second annular rib) is formed inside the main annular rib 17.

The main annular rib 17 (first annular rib) and the sub-annular rib 18 (second annular rib) are disposed coaxially with the vertical axis X. The main annular rib 17 has substantially the same radius as the tubular portion 12, and the sub-annular rib 18 has a smaller diameter than the main annular rib 17.

The main annular rib 17 (first annular rib) includes a first main annular rib 17a formed on the upper housing 10a and a second main annular rib 17b formed on the lower housing 10b. The sub-annular rib 18 (second annular rib) includes a first sub-annular rib 18a formed on the upper housing 10a and a second sub-annular rib 18b formed on the lower housing 10b.

The first main annular rib 17a and the second main annular rib 17b are integrated by welding to form the main annular rib 17. The first sub-annular rib 18a and the second sub-annular rib 18b are integrated by welding to form the sub-annular rib 18. The welding will be described later.

As shown in FIGS. 1 and 2, the pump 3 is connected to a flange portion 4 at both ends of the upper housing 10a in a longitudinal direction in a plan view. The pump 3 unitizes an electric motor portion 3a and an impeller portion 3b. The pump 3 is provided with the impeller portion 3b inserted into an opening of the flange portion 4.

The upper housing 10a bulges upward at a site where the valve 2 is disposed, and the outer wall 21 (first outer wall rib 21a) at an outer edge portion has the smallest dimension in the upper-lower direction. As shown in FIGS. 1 and 3, the upper housing 10a includes a vertical wall portion 5 formed integrally on an outer periphery of the upper housing 10a in order to increase a strength of the outer periphery.

The vertical wall portion 5 has a plate shape rising upward from the outer periphery of the upper housing 10a and is connected in such a manner that an outer surface of the vertical wall portion 5 and an outer surface of the first outer wall rib 21a are flush with each other. The vertical wall portion 5 is disposed at a position overlapping the first outer wall rib 21a in a plan view. A part of the tubular ports 1 penetrate the vertical wall portion 5.

A strength of a part of the outer edge portion of the upper housing 10a is increased by forming the vertical wall portion 5. Since the vertical wall portion 5 is formed, a recessed space opened upward is defined between the vertical wall portion 5 and the upper housing 10a. The vertical wall portion 5 forms a drain hole 5a (an example of a liquid discharge hole) for discharging water (liquid) accumulated in the recessed space.

### Lower Housing

As shown in FIGS. 2, 7, 10, and 11, the lower housing 10b includes a bottom wall 7. The lower housing 10b has a second opening S2 opened upward. When the first opening S1 and the second opening S2 described above are joined by thermal welding, the lower housing 10b is integrated with the upper housing 10a to form the housing 10.

### First Opening

The first opening S1 shown in FIG. 4 represents a form of an opening of the upper housing 10a before welding.

In the first opening S1, the first outer wall rib 21a and a plurality of first partition wall ribs 22a are formed in a region surrounding the outer periphery of the upper housing 10a. Further, the first main annular rib 17a, the first sub-annular rib 18a, and the first partition wall ribs 22a are formed in the first opening S1.

In particular, in the first outer wall rib 21a, a first pressure receiving rib region 21ap, which is a relatively long region where a pressure of the fluid in the flow path chamber LS acts from the inside, is formed into a curved shape bulging toward a region where the fluid flows (inward: lower side in FIG. 4), thereby preventing deformation due to the pressure.

As described above, the flow path chamber LS is formed between the partition walls 22 or between the outer wall 21 and the partition wall 22, and FIG. 4 shows a position of the flow path chamber LS between the plurality of first partition wall ribs 22a or between the first outer wall rib 21a and the first partition wall rib 22a.

As shown in FIG. 4, the plurality of tubular ports 1 (inflow and outflow pipes), which are disposed in a penetrating state between the first outer wall rib 21a and the first partition wall rib 22a, are supported in a reinforced state by reinforcement portions T made of resin at sites penetrating the first outer wall rib 21a and the first partition wall rib 22a.

By forming the reinforcement portion T in this way, not only the tubular port 1 is firmly supported but also a positional relationship between the outer wall 21 and the partition wall 22 is appropriately maintained, and as a result, shape retention of the housing 10 is improved.

### Second Opening

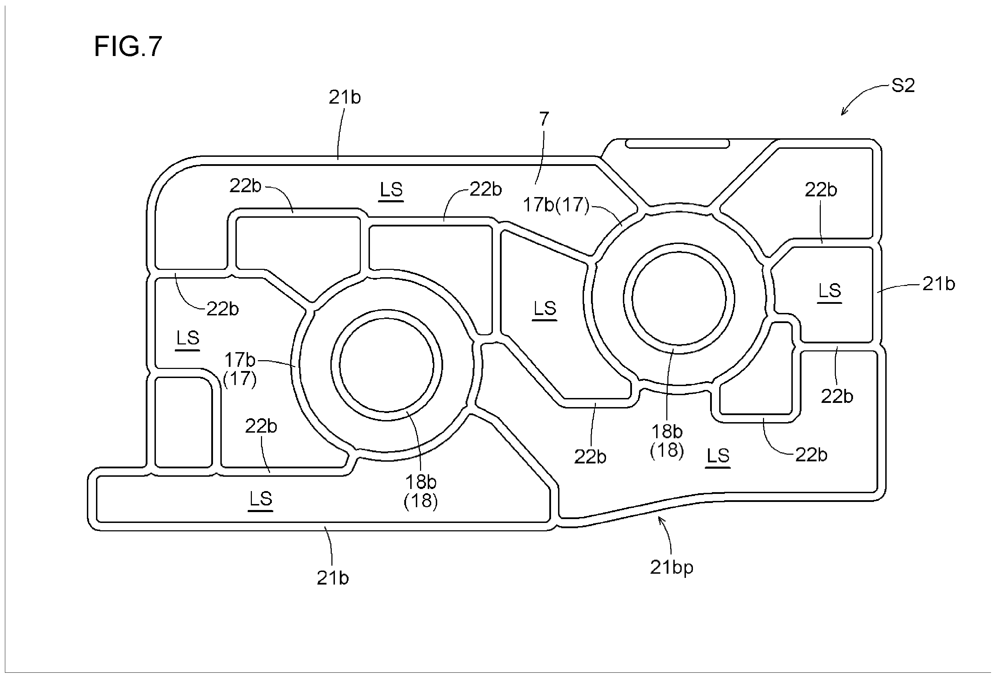

The second opening S2 shown in FIG. 7 represents a form of an opening of the lower housing 10b before welding.

In the second opening S2, the second outer wall rib 21b and a plurality of second partition wall ribs 22b are formed in a region surrounding an outer periphery of the lower housing 10b. Further, the second main annular rib 17b, the second sub-annular rib 18b, and the second partition wall ribs 22b are formed in the second opening S2.

Similarly to the first opening S1, a position of the flow path chamber LS is shown between the plurality of second partition wall ribs 22b or between the second outer wall rib 21b and the second partition wall rib 22b.

In the second opening S2, the second main annular rib 17b and the second sub-annular rib 18b are disposed at positions overlapping the first main annular rib 17a and the first sub-annular rib 18a. The plurality of second partition wall ribs 22b are disposed at positions overlapping the corresponding first partition wall ribs 22a.

Further, the second opening S2 forms the second outer wall rib 21b at a position overlapping the first outer wall rib 21a. A second pressure receiving rib region 21bp is formed at a position overlapping the first pressure receiving rib region 21ap. The second pressure receiving rib region 21bp is also formed into a curved shape bulging in a direction (inward) in which the fluid flows, thereby preventing deformation due to a pressure.

The first outer wall rib 21a, the first partition wall rib 22a, or the like exposed in the first opening S1 may be simply referred to as a "rib", and the second outer wall rib 21b, the second partition wall rib 22b, or the like exposed in the second opening S2 may also be simply referred to as a "rib".

### Cutout Portion

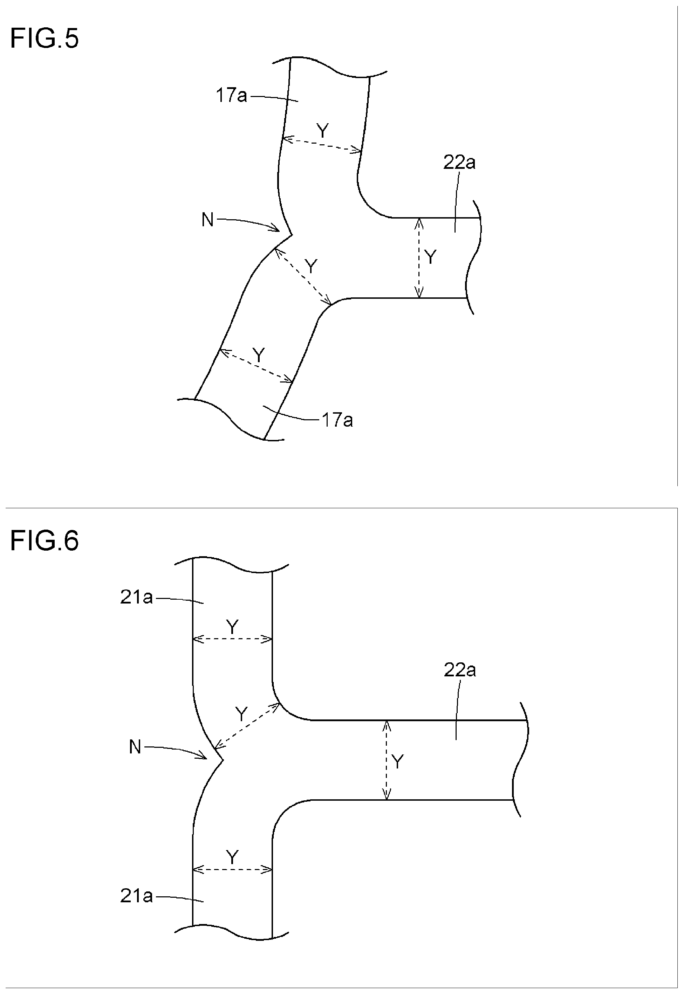

As shown in FIGS. 4 and 6, a position where the first outer wall rib 21a and the first partition wall rib 22a formed in the first opening S1 are connected, or a site where the first main annular rib 17a and the first partition wall rib 22a are connected becomes a boundary region having the same shape as a three-way intersection.

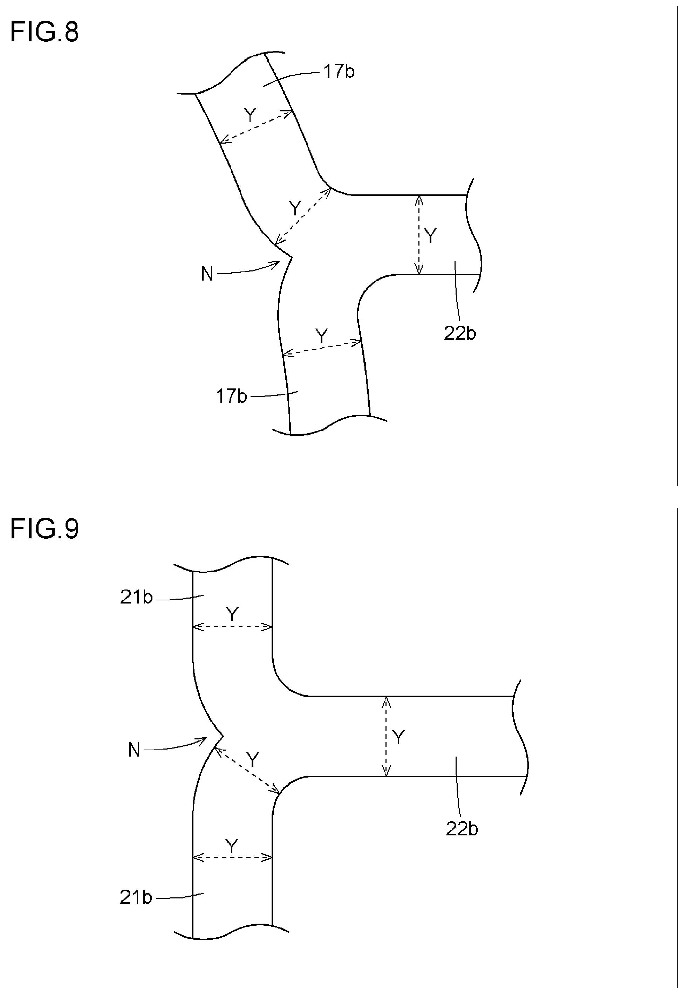

As shown in FIGS. 7 and 9, a position where the second outer wall rib 21b and the second partition wall rib 22b formed in the second opening S2 are connected, or a site where the second main annular rib 17b and the second partition wall rib 22b are connected becomes a boundary region having the same shape as a three-way intersection.

The thermal welding is implemented by joining the first opening S1 and the second opening S2 in such a manner that facing sites are pressed together under heating. In this joining, facing surfaces of the first outer wall rib 21a and the second outer wall rib 21b are joined in a molten state, and the first partition wall rib 22a and the second partition wall rib 22b are joined in a molten state.

After the joining, it is desirable that a joining portion dissipates heat uniformly and the resin solidifies. However, since a site of the three-way intersection is thicker than the ribs connected thereto, a delay in temperature reduction occurs in a part of the site of the three-way intersection during the thermal welding. Due to such a delay in temperature reduction, a difference in an amount of thermal expansion may cause deformation such as twisting or distortion in joining surfaces.

In order to prevent such inconvenience, as shown in FIGS. 5, 6, 8, and 9, a cutout portion N is formed to equalize a thickness at the site of the three-way intersection. A thickness Y of each rib is constant, and in order to make the thickness Y constant at the site of the three-way intersection, the cutout portion N has a shape that combines arc surfaces having a radius equal to the thickness Y.

Taking the first outer wall rib 21a as an example, when a radius of bending is small at a corner of the first outer wall rib 21a, deformation is likely to occur during the thermal welding. For this reason, a bent shape with a large radius for preventing deformation at the corner portion is also adopted.

### Setting of Welding Position

As shown in FIGS. 2, 10, and 11, a boundary in the housing 10 where the first opening S1 and the second opening S2 are thermally welded is referred to as a joining portion W.

In the manifold M, the joining portion W is disposed below a central position C of the housing 10 in the upper-lower direction. That is, a lower dimension Hb from the joining portion W to a lower end of the lower housing 10b is set to be a value smaller than an upper dimension Ha from the joining portion W to an upper end of the upper housing 10a. In the present embodiment, the upper dimension Ha is approximately four times the lower dimension Hb. The upper dimension Ha is preferably twice or more the lower dimension Hb, and more preferably three times or more the lower dimension Hb.

In the housing 10, at a site where a pressure of the fluid flowing in the flow path chamber LS acts on the outer wall 21, the outer wall 21 is deformed so as to bulge laterally outward when the pressure of the fluid increases.

In this deformation, the central position C of the housing 10 (the manifold M) in the upper-lower direction protrudes outward most greatly. Because of this configuration, for example, when the joining portion W is located at the central position C of the housing 10 in the upper-lower direction, a stress caused by the deformation may be concentrated on the joining portion W, and the joining portion W may be damaged.

In particular, the housing 10 is made of a glass fiber reinforced thermoplastic resin. However, this resin has a form in which only the resin is joined at the joining portion W during the thermal welding, and it can be said that the joining surfaces are likely to be damaged when an external force is applied.

From a viewpoint of preventing such damage, by setting the lower dimension Hb of the lower housing 10b smaller than the upper dimension Ha of the upper housing 10a, the joining portion W is set below the central position C of the housing 10 in the upper-lower direction.

According to such a configuration, even when the housing 10 is deformed to bulge due to the pressure of the fluid, a resin base material including glass fibers of the upper housing 10a is deformed, thereby reducing the stress acting on the joining portion W and preventing inconvenience that causes damage.

### Operational Effects of Embodiment

In this way, the joining portion W, in which the first opening S1 of the upper housing 10a and the second opening S2 of the lower housing 10b are joined by thermal welding, is disposed below the central position C of the housing 10 in the upper-lower direction. Therefore, even when the central position C of the outer wall 21 of the housing 10 in the upper-lower direction bulges outward most greatly as the pressure of the fluid flowing inside the housing 10 increases, no stress is concentrated on the joining portion W, and the joining portion W is not damaged.

In the thermal welding, the first opening S1 and the second opening S2 are heated by heat from an infrared heat source to melt the ribs exposed in the upper opening S and the ribs exposed in the second opening S2. Next, a pressure is applied to the upper housing 10a and the lower housing 10b to join the molten ribs, and the resin solidifies due to heat dissipation, completing the thermal welding.

In the thermal welding, the cutout portion N is formed in the boundary region of the three-way intersection of the ribs, thereby allowing uniform heat dissipation at the joining surfaces of the ribs and preventing deformation such as distortion.

The tubular portion 12 that rotatably accommodates the valve body 13 has a double structure in which the main annular rib 17 and the sub-annular rib 18 disposed at a bottom portion are coaxial, thereby enabling a posture of the tubular portion 12 to be stabilized.

The main annular rib 17 is formed by thermal welding of the first main annular rib 17a and the second main annular rib 17b, and the sub-annular rib 18 is formed by thermal welding of the first sub-annular rib 18a and the second sub-annular rib 18b. Accordingly, appropriate joining is enabled by satisfactory heat dissipation during the thermal welding without increasing the thickness of the main annular rib 17 and the sub annular rib 18.

By forming the outer wall 21 on which the pressure from the fluid in the flow path chamber LS acts into a curved shape bulging toward the flow path chamber LS, even when this outer wall 21 is relatively longer than other outer walls 21, inconvenience of deforming to bulge outward is eliminated.

The tubular port 1 penetrating a region from the first outer wall rib 21a to the first partition wall rib 22a is reinforced by the reinforcement portion T at a penetrating site. Accordingly, not only the tubular port 1 is firmly supported but also the outer wall 21 and the partition wall 22 are stabilized in posture, and as a result, shape retention of the housing 10 is improved.

An outer peripheral portion of the upper housing 10a has increased strength due to the vertical wall portion 5 formed integrally with the outer peripheral portion, thereby a warpage of a welding end surface can be reduced, enabling to ensure a welding area and prevent a welding strength from decreasing. By forming the vertical wall portion 5, water that enters the recessed space can be discharged through the drain hole 5a (liquid discharge hole).

### Other Embodiments

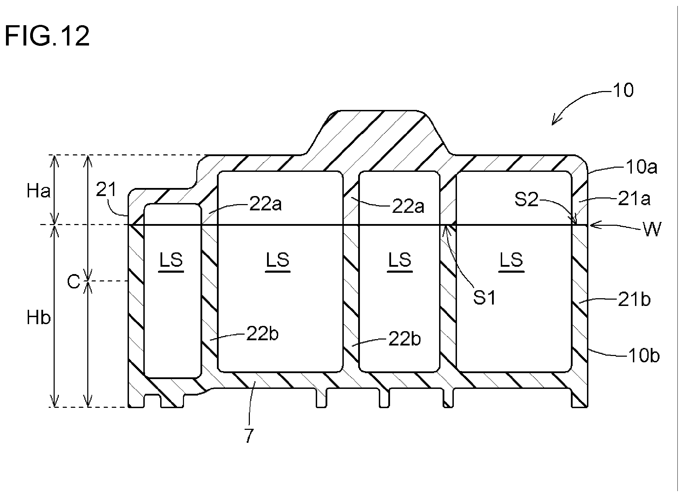

In addition to the above embodiment, this disclosure may be implemented as follows (those having the same functions as the embodiment are denoted by the same reference numerals as in the embodiment).
(a) As shown in FIG. 12, the joining portion W of the manifold M is set above the central position C of the housing 10 in the upper-lower direction. Also in this configuration, even when the outer wall 21 bulges laterally outward due to action of a pressure of the fluid flowing in the flow path chamber LS, the resin base material containing glass fibers of the upper housing 10a is deformed, thereby preventing a stress acting on the joining portion W from increasing, and preventing inconvenience that causes damage.
(b) The ribs exposed in the first opening S1 and the second opening S2 are not limited to flat surfaces, and for example, may have shapes including a concave portion and a convex portion that enable portions of a lower end of the first outer wall rib 21a and an upper end of the second outer wall rib 21b to fit together.
   By using the concave portion and the convex portion in this way, it is possible to appropriately maintain a positional relationship between the first opening S1 and the second opening S2 when thermal welding is performed by fitting the concave portion and the convex portion together.
(c) A shape of the cutout portion N is not limited to a combination of the arc surfaces, and for example, may be a concave shape in a plan view by combining short straight lines.
(d) As shown in FIGS. 4, 13, and 14, the first opening S1 of the manifold M has an end surface (lower surface) of a rib lower end portion Rae of an upper rib Ra of the upper housing 10a. As shown in FIGS. 7, 13, and 14, the second opening S2 of the manifold M has an end surface (upper surface) of a rib upper end portion Rbe of a lower rib Rb of the lower housing 10b.

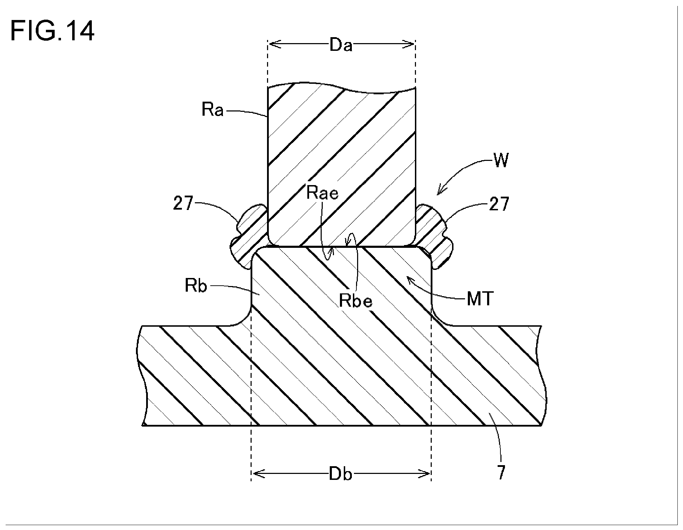

In the manifold M, the end surface of the rib lower end portion Rae and the end surface of the rib upper end portion Rbe are joined by thermal welding at the joining portion W shown in FIG. 14. In the following description, a boundary at which the rib lower end portion Rae of the upper rib Ra and the rib upper end portion Rbe of the lower rib Rb are joined is referred to as a welding surface MT in the joining portion W.

The upper rib Ra is a superordinate concept of each of the first main annular rib 17a, the first sub-annular rib 18a, the first outer wall rib 21a, and the first partition wall rib 22a shown in FIG. 4. The lower rib Rb is a superordinate concept of each of the second main annular rib 17b, the second sub-annular rib 18b, the second outer wall rib 21b, and the second partition wall rib 22b shown in FIG. 7.

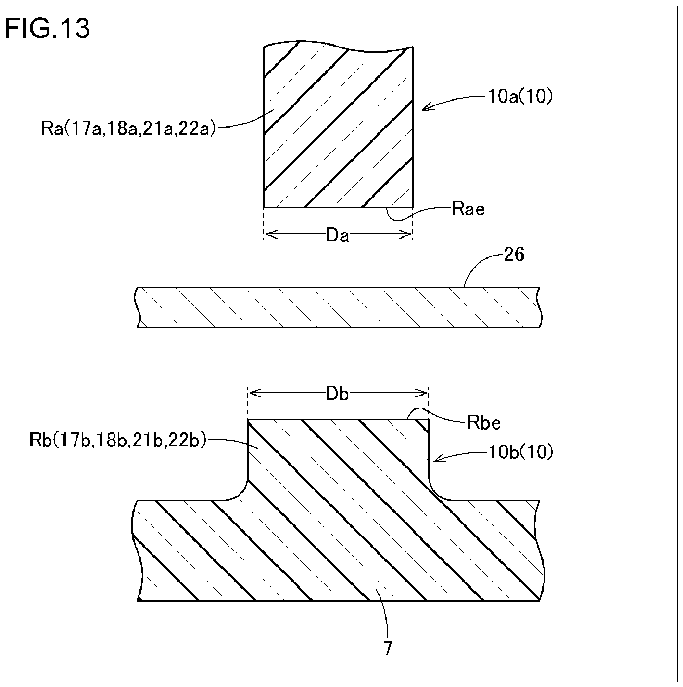

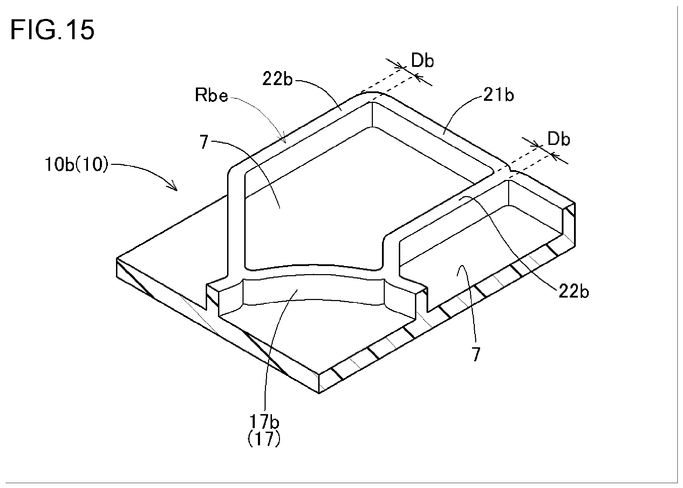

In the embodiment (d), as shown in FIGS. 13, 14, and 15, a thickness of the rib lower end portion Rae of the upper rib Ra (hereinafter referred to as an upper rib width Da) is different from a thickness of the rib upper end portion Rbe of the lower rib Rb (hereinafter referred to as a lower rib width Db). In the embodiment (d), the upper rib width Da is set to be smaller than the lower rib width Db (a relationship of Da < Db). This dimensional relationship may be reversed (Da > Db).

By setting the dimensional relationship between the upper rib width Da and the lower rib width Db in this way, even when the rib lower end portion Rae of the upper rib Ra and the rib upper end portion Rbe of the lower rib Rb are displaced from each other in a rib width direction within a tolerance range, for example, it is possible to prevent inconvenience that a widthwise end portion of one of the rib lower end portion Rae of the upper rib Ra and the rib upper end portion Rbe of the lower rib Rb protrudes outward from a widthwise end portion of the other, and to perform thermal welding in a state of being within a width in the rib width direction.

A reason for setting such a dimensional relationship is to increase a joining strength of the joining portion W by enlarging an area of the joining portion W and to enable welding of the rib lower end portion Rae and the rib upper end portion Rbe within the width in the rib width direction as described above.

In a structure in which the upper rib width Da and the lower rib width Db are simply increased in order to increase the joining strength of the joining portion W, a weight of the manifold M increases and an amount of resin to be used increases. In order to eliminate this inconvenience, as shown in FIG. 13, the upper rib width Da necessary to increase the joining strength of the joining portion W is set, and the lower rib width Db larger than the upper rib width Da is set.

When the two ribs having different rib widths (the rib lower end portion Rae and the rib upper end portion Rbe) are equally heated at the same time in order to perform the thermal welding, it can be confirmed that the temperature of the rib having a smaller rib width becomes higher than that of the rib having a larger rib width because the rib having a smaller rib width has a smaller amount of heat radiation to the outside due to the heat conduction.

When welding two ribs with a temperature difference between joining surfaces thereof (the end surface of the rib lower end portion Rae and the end surface of the rib upper end portion Rbe), a strength required for the welding surface MT may not be obtained. A reason for this is that, when the two ribs are brought into contact with each other by applying a pressure for welding, it is considered that a fluidity of the molten resin on the joining surface of the rib on a high temperature side is high, and the pressure is not appropriately applied between the two ribs, and the resin in the molten state is not bound with a required force.

In the embodiment (d), good thermal welding is enabled by reducing the temperature difference between the rib lower end portion Rae of the upper rib Ra and the rib upper end portion Rbe of the lower rib Rb. That is, when heating the rib lower end portion Rae and the rib upper end portion Rbe to perform thermal welding, as shown in FIG. 13, an infrared heater 26 is disposed between the rib lower end portion Rae of the upper rib Ra and the rib upper end portion Rbe of the lower rib Rb.

In the thermal welding, when a temperature exceeds a temperature at which the resin is melted between the end surface of the rib lower end portion Rae and the end surface of the rib upper end portion Rbe by heating by the infrared heater 26, the heat source is removed, and the rib lower end portion Rae and the rib upper end portion Rbe are brought into contact with each other at an appropriate pressure.

In this way, by bringing the rib lower end portion Rae and the rib upper end portion Rbe into contact with each other at the appropriate pressure, as shown in FIG. 14, the resin in the molten state is brought into pressure-contact with each other on the end surfaces, enabling generation of a firmly joined welding surface MT.

In the embodiment (d), a value of the upper rib width Da is a joining width, and the joining width is set to be 4 mm or more and 8 mm or less. In the welding, a part of the molten resin flows out from the boundary of the joining portion W, thereby forming a burr portion 27. As compared with when the joining width is set to be 3.0 mm, when the joining width is set to be 4.5 mm, a maximum generated stress reduction rate is 48% and a rupture time is 20 times or more. Therefore, the joining width is preferably 4 mm or more and 8 mm or less.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive.

In the embodiments described above, the following configurations are conceivable.
(1) A manifold M includes: a valve 2 configured to control a flow of fluid; and a housing 10 having, in an internal space, a plurality of flow path chambers LS which is partitioned by a partition wall 22 and through which the fluid flows. The housing 10 includes a joining portion W where an upper housing 10a having a first opening S1 opened downward and a lower housing 10b having a second opening S2 opened upward are joined by thermally welding the first opening S1 and the second opening S2. The joining portion W is disposed above or below a center (central position C) of the housing 10 in an upper-lower direction.
   According to this characteristic configuration, by thermally welding the first opening S1 of the upper housing 10a and the second opening S2 of the lower housing 10b, the upper housing 10a and the lower housing 10b are joined at the joining portion W to form the integrated housing 10. Since the joining portion W is located above or below the center (central position C) of the housing 10 in the upper-lower direction, for example, even when the central position C of an outer wall 21 of the housing 10 in the upper-lower direction bulges outward most greatly as a pressure of the fluid flowing inside the housing 10 increases, no stress is concentrated on the joining portion W, and the joining portion W is not damaged.
(2) In the manifold M according to (1), it is preferable that the joining portion W has a cutout portion N that equalizes a thickness of a three-way intersection in a boundary region of the three-way intersection where two partition walls 22, or one partition wall 22 and the outer wall 21 of the housing 10 intersect.
   According to this, since the thickness is made uniform by forming the cutout portion N, when sites of the three-way intersection are brought into contact under heating, and a temperature is reduced in this contact state, heat is uniformly dissipated at a contact portion, thereby eliminating inconvenience that causes twisting and distortion.
(3) In the manifold M according to (1) or (2), it is preferable that, the valve 2 includes a tubular portion 12 centered on a vertical axis X along the upper-lower direction, and a valve body 13 accommodated in the tubular portion 12 to be rotatable about the vertical axis X, and the joining portion W includes a first annular rib (main annular rib 17) disposed at a lower end position of the tubular portion 12 and a second annular rib (sub-annular rib 18) disposed inside the first annular rib (main annular rib 17) in a region centered on the vertical axis X.
   According to this, the first annular rib (main annular rib 17) and the second annular rib (sub-annular rib 18) inside the first annular rib are doubly disposed at the lower end position of the tubular portion 12. Accordingly, a strength of the tubular portion 12 at the lower end position can be increased. It is also possible to increase the strength by providing a thick (wide) annular rib at the lower end position of the tubular portion 12, but this may lead to inconvenience of uneven heat dissipation during thermal welding. On the other hand, by disposing the annular ribs doubly, heat dissipation from the double ribs is uniformly performed.
(4) In the manifold M according to (1), it is preferable that the outer wall 21 of the housing 10, which forms the flow path chamber LS relatively long in a direction in which the fluid flows among the plurality of flow path chambers LS, has a curved shape bulging toward the flow path chamber LS.
   According to this, even when a pressure of the fluid flowing in the flow path chamber LS acts, deformation of the outer wall 21 bulging outward can be prevented.
(5) In the manifold M according to (1), it is preferable that the outer wall 21 of the housing 10 and the partition wall 22 are connected by a part of an inflow and outflow pipe (tubular port 1).
   According to this, since the inflow and outflow pipe (tubular port 1) is connected to the outer wall 21 and the partition wall 22, not only the inflow pipe (the tubular port 1) is firmly supported but also a relative positional relationship between the outer wall 21 and the partition wall 22 is stabilized, and as a result, shape retention of the housing 10 is improved.
(6) In the manifold M according to (1), it is preferable that a vertical wall portion 5 is formed along an outer periphery of the housing 10, and has a liquid discharge hole (drain hole 5a) for discharging a liquid that enters inside of the vertical wall portion 5.
   According to this, a strength of an outer edge portion of the housing 10 can be increased by forming the vertical wall portion 5, thereby a warpage of a welding end surface can be reduced, enabling to ensure a welding area and prevent a welding strength from decreasing. A recessed space is formed between the outer periphery of the housing 10 and the vertical wall portion 5, and even when water accumulates in the recessed space, the water can be discharged through the drain hole 5a.
(7) In the manifold M according to (1), the first opening S1 is a rib lower end portion Rae of an upper rib Ra extending downward in the upper housing 10a, and the second opening S2 is a rib upper end portion Rbe of a lower rib Rb formed in the lower housing 10b and extending upward, and an upper rib width Da that is a thickness of the rib lower end portion Rae is different from a lower rib width Db that is a thickness of the rib upper end portion Rbe.
   According to this, even when the rib lower end portion Rae of the upper rib Ra and the rib upper end portion Rbe of the lower rib Rb are in a positional relationship of being displaced from appropriate positions in a rib width direction within a tolerance range, for example, it is possible to prevent inconvenience that a widthwise end portion of one of the rib lower end portion Rae of the upper rib Ra and the rib upper end portion Rbe of the lower rib Rb protrudes outward from a widthwise end portion of the other, and to perform thermal welding in a positional relationship of being within a width in the rib width direction.
(8) In the manifold M according to (6) and (7), it is preferable that a joining width for thermally welding the rib lower end portion Rae and the rib upper end portion Rbe is 4 mm or more and 8 mm or less.
   According to this, thermal welding in a practical width range of 4 mm or more and 8 mm or less can be performed.
(9) In the manifold M according to (7), a width of a thinner rib is 75% to 88% of a width of a thicker rib.

According to this, it is possible to thermally weld the ribs having different rib widths in which the width of the thinner rib is 75% to 88% of the width of the thicker rib.

### Industrial Applicability

This disclosure can be used for a manifold.

## Claims

1. A manifold (M) comprising:
a valve (2) configured to control a flow of fluid; and
a housing (10) having, in an internal space, a plurality of flow path chambers (LS) which is partitioned by a partition wall (22) and through which the fluid flows, wherein
the housing includes a joining portion (W) where an upper housing (10a) having a first opening (S1) opened downward and a lower housing (10b) having a second opening (S2) opened upward are joined by thermally welding the first opening and the second opening, and
the joining portion is disposed above or below a center of the housing in an upper-lower direction, wherein
the first opening is a rib lower end portion (Rae) of an upper rib (Ra) extending downward in the upper housing, and the second opening is a rib upper end portion (Rbe) of a lower rib (Rb) formed in the lower housing and extending upward,
**characterized in that**
an upper rib width (Da) that is a thickness of the rib lower end portion is different from a lower rib width (Db) that is a thickness of the rib upper end portion.

2. The manifold according to claim 1, wherein
a joining width for thermally welding the rib lower end portion and the rib upper end portion is 4 mm or more and 8 mm or less.

3. The manifold according to claim 1 or 2, wherein
a width of a thinner rib is 75% to 88% of a width of a thicker rib.

## Patentansprüche

1. Verteiler (M) mit:
einem Ventil (2), das dazu eingerichtet ist, einen Fluidstrom zu steuern; und
einem Gehäuse (10), das in einem Innenraum eine Vielzahl von Strömungskammern (LS) aufweist, die durch eine Trennwand (22) unterteilt sind und durch die das Fluid strömt, wobei
das Gehäuse einen Verbindungsabschnitt (W) aufweist, an dem ein oberes Gehäuse (10a) mit einer nach unten offenen ersten Öffnung (S1) und ein unteres Gehäuse (10b) mit einer nach oben offenen zweiten Öffnung (S2) durch thermisches Verschweißen der ersten Öffnung und der zweiten Öffnung miteinander verbunden sind, und
der Verbindungsabschnitt oberhalb oder unterhalb einer Mitte des Gehäuses in Vertikalrichtung angeordnet ist, wobei
die erste Öffnung ein unterer Rippenendabschnitt (Rae) einer oberen Rippe (Ra) ist, die sich in dem oberen Gehäuse nach unten erstreckt, und die zweite Öffnung ein oberer Rippenendabschnitt (Rbe) einer unteren Rippe (Rb) ist, die in dem unteren Gehäuse ausgebildet ist und sich nach oben erstreckt,
**dadurch gekennzeichnet, dass**
eine obere Rippenbreite (Da), die eine Dicke des unteren Rippenendabschnitts ist, sich von einer unteren Rippenbreite (Db), die eine Dicke des oberen Rippenendabschnitts ist, unterscheidet.

2. Verteiler nach Anspruch 1, wobei
eine Verbindungsbreite zum thermischen Verschweißen des unteren Rippenendabschnitts und des oberen Rippenendabschnitts 4 mm oder mehr und 8 mm oder weniger beträgt.

3. Verteiler nach Anspruch 1 oder 2, wobei
eine Breite einer dünneren Rippe 75 % bis 88 % einer Breite einer dickeren Rippe beträgt.

## Revendications

1. Collecteur (M) comprenant :
une vanne (2) configurée pour commander un écoulement de fluide ; et
un boîtier (10) comportant, dans un espace interne, une pluralité de chambres de trajet d'écoulement (LS) séparées par une paroi de séparation (22) et à travers lesquelles s'écoule le fluide, dans lequel
le boîtier comprend une partie d'assemblage (W) dans laquelle un boîtier supérieur (10a) comportant une première ouverture (S1) ouverte vers le bas et un boîtier inférieur (10b) comportant une seconde ouverture (S2) ouverte vers le haut sont assemblés par soudage thermique de la première ouverture et de la seconde ouverture, et
la partie d'assemblage est disposée au-dessus ou au-dessous d'un centre du boîtier dans le sens haut-bas, dans laquelle
la première ouverture est une partie d'extrémité inférieure de nervure (Rae) d'une nervure supérieure (Ra) s'étendant vers le bas dans le boîtier supérieur, et la seconde ouverture est une partie d'extrémité supérieure de nervure (Rbe) d'une nervure inférieure (Rb) formée dans le boîtier inférieur et s'étendant vers le haut,
**caractérisé en ce que**
une largeur de nervure supérieure (Da) étant une épaisseur de la partie d'extrémité inférieure de nervure est différente d'une largeur de nervure inférieure (Db) étant une épaisseur de la partie d'extrémité supérieure de nervure.

2. Collecteur selon la revendication 1, dans lequel
une largeur d'assemblage pour le soudage thermique de la partie d'extrémité inférieure de nervure et de la partie d'extrémité supérieure de nervure est comprise entre 4 mm et 8 mm.

3. Collecteur selon la revendication 1 ou 2, dans lequel
une largeur d'une nervure plus fine est de 75 % à 88 % d'une largeur d'une nervure plus épaisse.
